# EUROPEAN PATENT SPECIFICATION

(11) **EP 2 825 753 B1**
(45) Date of publication and mention of the grant of the patent: **03.08.2016**
(21) Application number: 13706284.0
(22) Date of filing: 29.01.2013
(51) Int. Cl.: F02D 35/02, F02P 5/15

(54) **METHOD AND ARRANGEMENT FOR CONTROLLING KNOCK**
VERFAHREN UND ANORDNUNG ZUR KLOPFREGELUNG
PROCÉDÉ ET AMÉNAGEMENT DE COMMANDE DE CLIQUETIS

(30) Priority: 15.03.2012 FI 20125289
(43) Date of publication of application: 21.01.2015
(73) Proprietor: Wärtsilä Finland Oy, 65380 Vaasa (FI)
(72) Inventor: ANDERSON, Juha, FI-65100 Vaasa (FI); FORS, Patrik, FI-65300 Vasa (FI); NYLUND, Daniel, FI-65610 Korsholm (FI)
(74) Representative: Berggren Oy Ab
(86) International application number: PCT/FI2013/050093
(87) International publication number: WO 2013/135945

(56) References cited:
- US-A- 4 002 155
- US-A- 4 345 558
- US-A- 4 539 957

## Description

### Field of technology

This invention relates to a method and arrangement for controlling knock of an internal combustion engine. Especially the invention relates to internal combustion engines that use gas as fuel or engines that can use gas and another fuel type or types as fuel. The other fuel types are, for example, light fuel oil and heavy fuel oil.

### Prior art

Internal combustion engines are nowadays electronically controlled. In this way a good driving properties of the engine are possible, and the engine can be run on an optimal level wherein efficiency is good with low emissions. Running in the optimal level may lead to auto ignition of the combustion that may create knocking. The knocking forms extra stress to a cylinder.

See for example US 4 539 957.

The knocking phenomenon can be divided into light knocking and heavy knocking. As these names indicate the division is based on magnitude of the knocking. The heavy knocking is a situation that a normal knock control cannot handle, and the engine is normally shut down. There exist several solutions to handle the knocking of a cylinder or cylinders. When the knocking occurs, conditions of the cylinder are changed for removing or reducing the knocking. These solutions are specific control systems. Although the current control systems work at least satisfactory, response characteristics of the systems are desired to be faster and more accurate.

### Short Description

The objective of the invention is to provide more accurate and faster control arrangement for handling the knocking. The objective is achieved in a way described in the independents claims. The dependent claims describe different embodiments of the invention.

The idea of the invention is that a knock control works together with another control entity that is called as safety control. In order that cooperation between these units runs efficiently they are constructed in an inventive way. The safety unit provides safety control commands fast in cases where the response of the knock control does not influence to the conditions of the cylinder/s in a desired way. In other words, the invention provides a new arrangement for handling the knocking with fast response characteristics.

A knock control arrangement for a combustion engine according to the invention comprises a control unit that is arranged to form knock control commands to regulating units and is connectable to cylinder specific sensors. The arrangement further comprises a categorizing unit to categorize measurement data from the sensors to three scaling values indicating normal, light knock and heavy knock occasions, and a sliding window memory to keep the scaling values some time. The sliding window memory is divided into a handling area and a history area. The knock detection unit is arranged to detect light knock and heavy knock from the scaling values in the handling area and in the history area by summing the scaling values of the sliding window memory. The light knock of the cylinder is detected when the sum reaches a light knock threshold. The heavy knock of the cylinder is detected when the sum reaches a heavy knock threshold. The light knock threshold is reachable by the single heavy knock occasion. The control unit is arranged to use the light knock detection in the handling area for forming the knock control commands.

The control unit further comprises a monitoring unit to monitor the light and heavy knock detections in the handling area and in the history area, and a safety control unit to form primary safety control command as response to the heavy knock detection in the handling area and to form secondary safety control command as response to the heavy knock detections in the handling area and in the history area. The secondary safety control command is also depended on the combustion engines type and running mode.

### Drawings

Next the invention is described in more detail with the figures of the attached drawings in which drawings
Figure 1 illustrates an example of an inventive arrangement,
Figure 2 illustrates an example table of a categorizing function of the invention,
Figure 3 illustrates an example of a sliding window and calculation of values in the window,
Figure 4 illustrates an example of a diagram of the inventive method, and

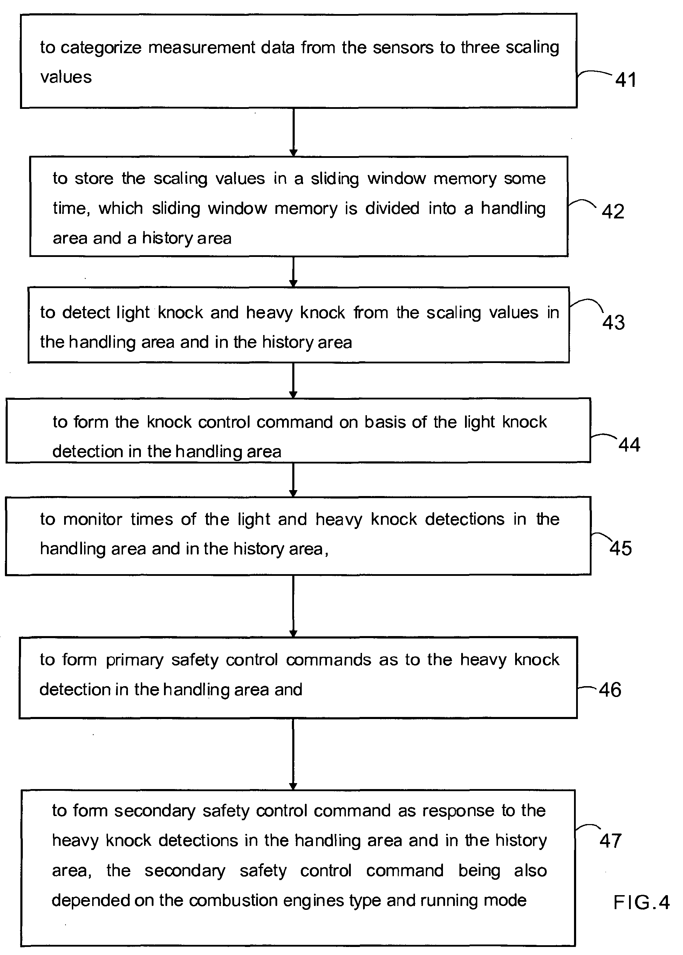

Figure 4 illustrates an example of sub phases of the inventive method.

### Description

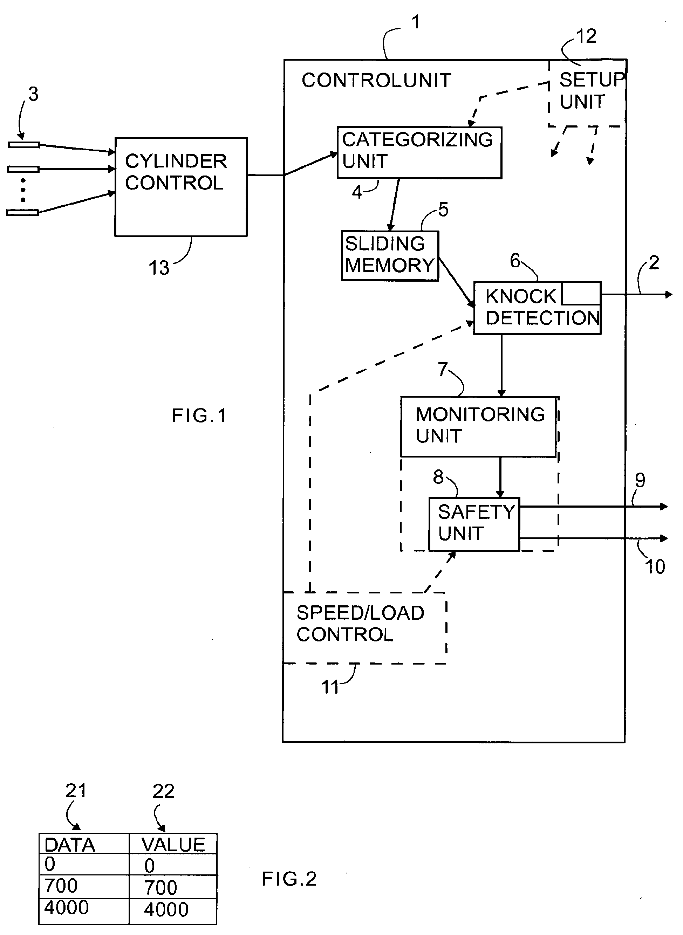

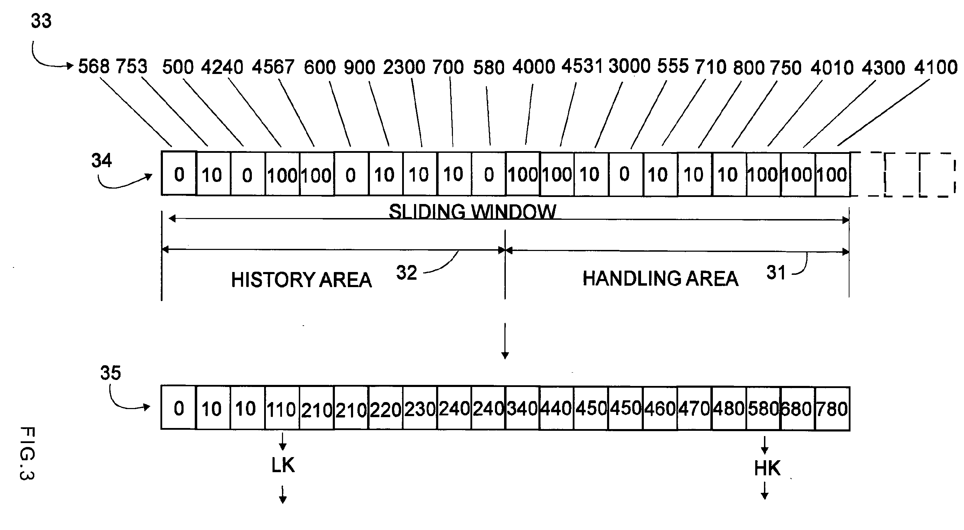

Figure 1 illustrates an embodiment of the invention. The knock control arrangement comprises a control unit 1 that is arranged to form knock control commands 2 to regulating units and is connectable to cylinder specific sensors 3. The arrangement further comprises a categorizing unit 4 to categorize measurement data from the sensors 3 to scaling values, and a sliding window memory 5 to keep the scaling values some time. The sliding window memory is divided into a handling area 31 and a history area 32 (shown in figure 3). Further the arrangement comprises knock detection unit 6 that is arranged to detect light knock and heavy knock from the scaling values in the handling area 31 and also in the history area 32. The control unit 1 is arranged to use the light knock detections in the handling area for forming the knock control commands. In this example the knock detection unit is arranged to do this task as well (small box inside the knock detection unit), but it can be arranged in another way as well. Further the arrangement comprises a monitoring unit 7 to monitor the knock detections in the handling area and in the history area, and a safety control unit 8 to form primary safety control commands 9 as response to the heavy knock detections in the handling area and to form secondary safety control commands 10 as response to the heavy knock detection in the handling area and in the history area. The secondary safety control command is also depended on the combustion engines type and running mode. The monitoring unit 7 and the safety unit can be also integrated into one entity that is illustrated as dashed line in Figure 1.

The measurement values from the sensors 3 are convenient to transmit from the cylinder to the control unit 1 via a separate unit/s that are often called cylinder control units 13. The cylinder control unit 13 may handle control tasks for several cylinders and is situated relatively near the cylinders to be controlled. An alternative embodiment utilizing the cylinder control 13 is that the control signal 2 from the knock detection unit 6 indicates only light knock detection and does not comprises any further info for the regulating units. In this alternative signal 2 is transmitted to the cylinder control unit 13 that as response to signal 2 forms actual instructions for the regulating units.

The categorizing of measurements values from the sensors 3 is arranged to three scaling values indicating normal, light knock and heavy knock occasions. The knock detection unit 6 is arranged to sum the scaling values of the sliding window memory 5 for detecting the light knock and the heavy knock. So the sum is calculated from the history and handling areas. The light knock of the cylinder is detected when the sum of the scaling values reaches a light knock threshold and the heavy knock of the cylinder being detected when the sum reaches a heavy knock threshold.

Figure 2 shows a table that illustrates an example of how the categorizing can be made. The first column 21 shows three different measurements value ranges: 0 - 700, over 700 to 4000 and over 4000. The measurement value indicates, for example, cylinder pressure, but any other parameter capable of indicating knock can be used. The second column 22 shows categorized values. When the measurement is between 0 - 700 the categorized value becomes zero. When the measurement is over 700 but at the most 4000 the categorized value becomes 10. And when the measurement is over 4000 the categorized value becomes 100. It should be noted that the measurement values in this example are only for illustrating the invention. In real solutions they may be other values. Also the ranges and categorizing values can be other values depending on an implementation. The value zero indicates normal condition, 10 indicates light knock and 100 indicates heavy knock occasion.

Figure 3 shows an example of the sliding window memory. The measurement values 33 are categorized, and the categorized values are put into the memory 34. The oldest input is on the left and the newest on the right in the memory. The older the input becomes more to the left the input moves inside the sliding window memory. The dashed memory places indicate sliding of the memory for illustrating the function of the memory. On the right side there are three coming occasions whose values are not yet measured and categorized. In the example of figure 3 the size of the handling area 31 is 10 occasions and size of the history area 32 is 10 occasions, one occasions occurring cycle wise of the engine. So, the sliding window memory is divided into the handling area 31 and into the history area 32. The values in the handling area are used for the knock control, i.e. the normal knock control. When the knock is detected the knock control drives for example fuel injection timing and/or air/fuel ratio of the cylinder/s that is/are knocking.

As said above, the light knock is detected when the sum of the scaling (categorized) values reaches a light knock threshold and the heavy knock is detected when the sum reaches a heavy knock threshold. The latest sum is always in the handling area 31 on the right. The sum may remain or increase, but only the reaching occasions mean the knock detections for the controlling. In the example of Figure 3 the knock detection unit 6 is arranged to sum 35 scaling values. Sum value 100 is a light knock threshold and sum value 500 is a heavy knock threshold. As can be noted, one heavy knock occasion reaches the knock threshold, so light knock control starts immediately. The arrangement reacts to heavy knock peaks (occasions), so they are noticed and they do not provide unnoticeable strain in the cylinder during a long period. In this example light knock LK was detected when the sum was 110, i.e. it reaches the threshold value 100. The heavy knock HK was detected when the sum was 580 reaching the heavy knock threshold value 500.

The safety control unit 8 forms primary safety control commands 9 as response to the heavy knock detection in the handling area 31. Primary safety control command 9 comprises control signals for load reduction of the engine. The safety control unit forms also secondary safety control command 10 as response to the heavy knock detections in the handling area 31 and in the history area 32. As can be noted the history area can be used in cases where the actions of the knock control (light or heavy knock control) have not caused a desired result. The actual content of the primary and secondary control commands depend on a structure of a whole control architecture. As said above the cylinder control may be arranged to from the actual commands for the regulating units.

The secondary safety control command is also depended on the combustion engines type and running mode. Said secondary safety control command 10 comprises control signals for shutdown of the engine if the combustion engines type is a gas engine or fuel switch over in case the engines type is dual fuel or multi fuel engine. The fuel switch over means that the engine running with gas is switched to run with another fuel like light fuel oil.

The engine may run in an extreme running condition (mode) which means that in case the knock control and the primary safety control have failed to correct the knocking, the secondary safety control has to shutdown the engine. In certain extreme running modes of the engine the said primary safety control command 9 can also comprise control signals for the shutdown. Further, the engine type being the dual fuel or multi fuel engine said primary safety control command 9 can also comprise control signals for the fuel switch over in certain running modes of the engine.

The control unit may also comprise a setup unit 12 to configure and reconfigure said scaling values. So the engine is easy to update to take care of changed conditions that a normal ageing of the engine causes. The setup unit may be arranged to setup parameters in the different units in the control unit. The control unit may also comprise a speed/load control unit 11 that provides running mode information to the different units of the control unit. Alternative the speed/load control unit can be separately from the control unit, but is connectable to the control unit for transmitting the running mode information. The safety control unit 8 can also be arranged to form an alarm in case of the light knock detection and/or in all other control cases and knock detections.

The invention relates also a knock control method for a combustion engine that is arranged to form knock control command to regulating units as response to data from cylinder specific sensors. Figure 4 illustrates the steps of the method. The first step is to categorize measurement data from the sensors to three scaling values indicating normal, light knock and heavy knock occasions 41. The next steps are to store the scaling values in a sliding window memory some time, which sliding window memory is divided into a handling area and a history area 42, and to detect light knock and heavy knock from the scaling values in the handling area and in the history area 43, and to form the knock control command on basis of the light knock detection in the handling area 44.

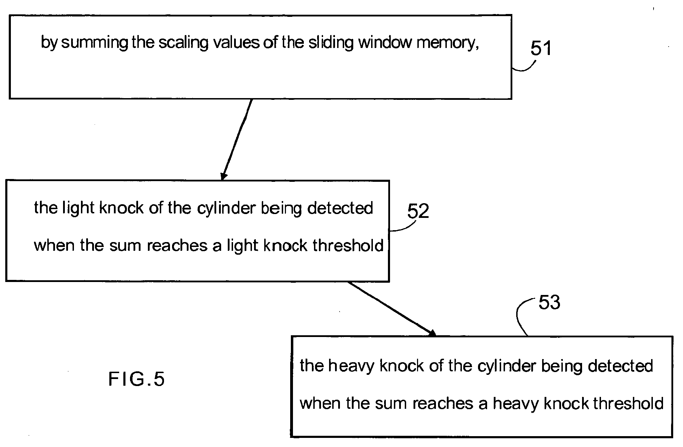

Figure 5 illustrates the detection step 43 in more detail showing its sub steps. The light and heavy knock are detected by summing the scaling values of the sliding window memory 51, the light knock of the cylinder being detected when the sum reaches a light knock threshold 52 and the heavy knock of the cylinder being detected when the sum reaches a heavy knock threshold 53. As can be noted the light knock threshold is reachable by the single heavy knock occasion.

The further steps according figure 4 are to monitor times of the light and heavy knock detections in the handling area and in the history area 45, to form primary safety control commands as response to the heavy knock detection in the handling area 46, and to form secondary safety control command as response to the heavy knock detections in the handling area and in the history area, the secondary safety control command being also depended on the combustion engines type and running mode 47.

The knock control commands comprises commands to adjust pilot fuel timing and/or air/fuel ratio cylinder specifically, said primary safety control command comprising control signals for load reduction of the engine, and said secondary safety control command comprising control signals for shutdown of the engine if the combustion engines type is a gas engine, or fuel switch over in case the engines type is dual fuel or multi fuel engine.

If the engine type is the dual fuel or multi fuel engine the primary safety control command can also comprise control signals for the fuel switch over in certain running modes of the engine. In certain extreme running modes of the engine said primary safety control command can further comprise control signals for the shutdown.

Also in the method zero is said scaling value indicating normal condition, 10 indicates light knock and 100 indicates heavy knock. As said above 100 can be light knock threshold and 500 can be heavy knock threshold. The size of the handling area is 10 occasions and size of the history area can be 10 occasions, one occasions occurring cycle wise. The method can also be arranged to form commands for alarm

It is also clear that the invention is not restricted to the examples of this text, but the invention can be formed in any form within the limits of the claims.

## Claims

1. A knock control arrangement for a combustion engine, which knock control arrangement comprises a control unit (1) that is arranged to form knock control command (2) to regulating units and is connectable to cylinder specific sensors (3), **characterized in that**, the arrangement further comprises a categorizing unit (4) to categorize measurement data from the sensors (3) to three scaling values indicating normal, light knock and heavy knock occasions, a sliding window memory (5) to store the scaling values, which sliding window memory is divided into a handling area (31) and a history area (32), a knock detection unit (6) that is arranged to detect light knock and heavy knock from the scaling values in the handling area (31) and in the history area (32) by summing the scaling values of the sliding window memory (5), the light knock of the cylinder being detected when the sum reaches a light knock threshold and the heavy knock of the cylinder being detected when the sum reaches a heavy knock threshold, the light knock threshold being reachable by the single heavy knock occasion, which control unit (1) is arranged to use the light knock detection in the handling area (31) for forming the knock control command,
a monitoring unit (7) to monitor the light and heavy knock detections in the handling area (31) and in the history area (32), and a safety control unit (8) to form primary safety control command (9) as response to the heavy knock detection in the handling area (31) and to form secondary safety control command (10) as response to the heavy knock detections in the handling area (31) and in the history area (32), the secondary safety control command being also depended on the combustion engines type and running mode.

2. An arrangement according to claim 2, **characterized in that** the knock control command (2) of the control unit (1) comprises command to adjust pilot fuel timing and/or air/fuel ratio cylinder specifically,
said primary safety control command (9) comprising control signals for load reduction of the engine, and
said secondary safety control command (10) comprising control signals for shutdown of the engine if the combustion engines type is a gas engine, or fuel switch over in case the engines type is dual fuel or multi fuel engine.

3. An arrangement according to claim 2, **characterized in that** the engine type being the dual fuel or multi fuel engine the primary safety control command (9) can also comprise control signals for the fuel switch over in certain running modes of the engine.

4. An arrangement according to claim 3 **characterized in that** in certain extreme running modes of the engine the primary safety control command (9) can further comprise control signals for the shutdown.

5. An arrangement according to claim 1 -4, **characterized in that** zero is said scaling value indicating normal, 10 is said scaling value indicating light knock and 100 is said scaling value indicating heavy knock, and 100 is said light knock threshold and 500 is said heavy knock threshold.

6. An arrangement according to claim 5, **characterized in that** size of the handling area (31) is 10 occasions and size of the history area (32) is 10 occasions, one occasions occurring cycle wise.

7. An arrangement according to claim 1- 6, **characterized in that** it comprises a setup unit (12) to configure and reconfigure said scaling values.

8. An arrangement according to claim 7, **characterized in that** the safety control unit (1) is also arranged to form an alarm in case of the light knock detection.

9. A knock control method for a combustion engine that is arranged to form knock control command to regulating units as response to data from cylinder specific sensors, **characterized in that**, the method further comprises steps of
to categorize measurement data from the sensors to three scaling values indicating normal, light knock and heavy knock occasions (41),
to store the scaling values in a sliding window memory some time, which sliding window memory is divided into a handling area and a history area (42),
to detect light knock and heavy knock from the scaling values in the handling area and in the history area by summing the scaling values of the sliding window memory, the light knock of the cylinder being detected when the sum reaches a light knock threshold and the heavy knock of the cylinder being detected when the sum reaches a heavy knock threshold, the light knock threshold being reachable by the single heavy knock occasion (43),
to form the knock control command on basis of the light knock detection in the handling area (44),
to monitor times of the light and heavy knock detections in the handling area and in the history area (45),
to form primary safety control command as response to the heavy knock detection in the handling area (46) and
to form secondary safety control command as response to the heavy knock detections in the handling area and in the history area, the secondary safety control command being also depended on the combustion engines type and running mode (47).

10. A method according to claim 9, **characterized in that** the knock control command comprises command to adjust pilot fuel timing and/or air/fuel ratio cylinder specifically,
said primary safety control command comprising control signals for load reduction of the engine, and
said secondary safety control command comprising control signals for shutdown of the engine if the combustion engines type is a gas engine, or fuel switch over in case the engines type is dual fuel or multi fuel engine.

11. A method according to claim 10, **characterized in that** the engine type being the dual fuel or multi fuel engine the said primary safety control command can also comprise control signals for the fuel switch over in certain running modes of the engine.

12. A method according to claim 11 **characterized in that** in certain extreme running modes of the engine the said primary safety control command can further comprise control signals for the shutdown.

13. A method according to claim 9 -12, **characterized in that** zero is said scaling value indicating normal, 10 is said scaling value indicating light knock and 100 is said scaling value indicating heavy knock, and 100 is said light knock threshold and 500 is said heavy knock threshold.

14. A method according to claim 13, **characterized in that** size of the handling area is 10 occasions and size of the history area is 10 occasions, one occasions occurring cycle wise.

## Patentansprüche

1. Klopfsteueranordnung für einen Verbrennungsmotor, wobei die Klopfsteueranordnung eine Steuereinheit (1) umfasst, die eingerichtet ist, um einen Klopfsteuerbefehl (2) an Regeleinheiten zu bilden, und an zylinderspezifische Sensoren (3) angeschlossen werden kann, **dadurch gekennzeichnet, dass** die Anordnung ferner eine Kategorisierungseinheit (4) zum Kategorisieren von Messdaten von den Sensoren (3) zu drei Skalierwerten, die normale Ereignisse, Ereignisse mit einem leichten Klopfen und Ereignisse mit einem starken Klopfen angeben, einen Gleitfensterspeicher (5) zum Speichern der Skalierwerte, wobei der Gleitfensterspeicher in einen Bedienbereich (31) und einen Verlaufsbereich (32) aufgeteilt ist, eine Klopferfassungseinheit (6), die eingerichtet ist, um ein leichtes Klopfen und ein starkes Klopfen anhand der Skalierwerte in dem Bedienbereich (31) und in dem Verlaufsbereich (32) durch Summieren der Skalierwerte des Gleitfensterspeichers (5) zu erfassen, wobei das leichte Klopfen des Zylinders erfasst wird, wenn die Summe einen Schwellenwert des leichten Klopfens erreicht, und das starke Klopfen des Zylinders erfasst wird, wenn die Summe einen Schwellenwert des starken Klopfens erreicht, wobei der Schwellenwert des leichten Klopfens durch das einzige Ereignis mit einem starken Klopfen erreicht werden kann, wobei die Steuereinheit (1) eingerichtet ist, um die Erfassung des leichten Klopfens in dem Bedienbereich (31) zum Bilden des Klopfsteuerbefehls zu verwenden,
eine Überwachungseinheit (7) zum Überwachen der Erfassungen des leichten und starken Klopfens in dem Bedienbereich (31) und in dem Verlaufsbereich (32), und eine Sicherheitssteuereinheit (8) zum Bilden eines primären Sicherheitssteuerbefehls (9) als Reaktion auf die Erfassung des starken Klopfens in dem Bedienbereich (31) und zum Bilden eines sekundären Sicherheitssteuerbefehls (10) als Reaktion auf die Erfassungen des starken Klopfens in dem Bedienbereich (31) und in dem Verlaufsbereich (32) umfasst, wobei der sekundäre Sicherheitssteuerbefehl auch von der Art der Verbrennungsmotoren und dem Laufmodus abhängt.

2. Anordnung nach Anspruch 1, **dadurch gekennzeichnet, dass** der Klopfsteuerbefehl (2) der Steuereinheit (1) einen Befehl zum spezifischen Anpassen des Pilot-Kraftstoffeinspritzzeitpunkts und/oder Luft/Kraftstoff-Verhältnis-Zylinders umfasst,
wobei der primäre Sicherheitssteuerbefehl (9) Steuersignale zur Lastreduktion des Motors umfasst, und
der sekundäre Sicherheitssteuerbefehl (10) Steuersignale zum Herunterfahren des Motors, wenn die Art der Verbrennungsmotoren ein Gasmotor ist, oder Kraftstoffumschalten für den Fall, das die Art der Motoren ein Zweistoff- oder Mehrstoffmotor ist, umfasst.

3. Verfahren nach Anspruch 2, **dadurch gekennzeichnet, dass** bei der Motorart, die der Zweistoff- oder Mehrstoffmotor ist, der primäre Sicherheitssteuerbefehl (9) auch Steuersignale für das Kraftstoffumschalten bei bestimmten Laufmodi des Motors umfassen kann.

4. Verfahren nach Anspruch 3, **dadurch gekennzeichnet, dass** bei bestimmen extremen Laufmodi des Motors der primäre Sicherheitssteuerbefehl (9) ferner Steuersignale zum Herunterfahren umfassen kann.

5. Anordnung nach Anspruch 1 - 4, **dadurch gekennzeichnet, dass** Null der Skalierwert ist, der einen normalen Zustand angibt, 10 der Skalierwert ist, der ein leichtes Klopfen angibt und 100 der Skalierwert ist, der ein starkes Klopfen angibt, und 100 der Schwellenwert des leichten Klopfens und 500 der Schwellenwert des starken Klopfens ist.

6. Verfahren nach Anspruch 5, **dadurch gekennzeichnet, dass** die Größe des Bedienbereichs (31) 10 Ereignissen entspricht und die Größe des Verlaufsbereichs (32) 10 Ereignissen entspricht, wobei ein Ereignis zyklusweise auftritt.

7. Anordnung nach Anspruch 1 - 6, **dadurch gekennzeichnet, dass** sie eine Einstelleinheit (12) zum Konfigurieren und Neukonfigurieren der Skalierwerte umfasst.

8. Anordnung nach Anspruch 7, **dadurch gekennzeichnet, dass** die Sicherheitssteuereinheit (1) auch eingerichtet ist, um einen Alarm im Falle der Erfassung eines leichten Klopfens zu bilden.

9. Klopfsteuerverfahren für einen Verbrennungsmotor, das eingerichtet ist, um Klopfsteuerbefehle an Regeleinheiten als Reaktion auf Daten von zylinderspezifischen Sensoren zu bilden, **dadurch gekennzeichnet, dass** das Verfahren ferner folgende Schritte umfasst
Kategorisieren von Messdaten von den Sensoren zu drei Skalierwerten, die normale Ereignisse, Ereignisse mit einem leichten Klopfen und Ereignisse mit einem starken Klopfen (41) angeben,
Speichern der Skalierwerte in einem Gleitfensterspeicher während einer gewissen Zeit, wobei der Gleitfensterspeicher in einen Bedienbereich und einen Verlaufsbereich (42) aufgeteilt ist,
Erfassen eines leichten Klopfens und eines starken Klopfens anhand der Skalierwerte in dem Bedienbereich und in dem Verlaufsbereich durch Summieren der Skalierwerte des Gleitfensterspeichers, wobei das leichte Klopfen des Zylinders erfasst wird, wenn die Summe einen Schwellenwert des leichten Klopfens erreicht, und das starke Klopfen des Zylinders erfasst wird, wenn die Summe einen Schwellenwert des starken Klopfens erreicht, wobei der Schwellenwert des leichten Klopfens durch das einzige Ereignis mit einem starken Klopfen (43) erreicht werden kann,
Bilden des Klopfsteuerbefehls auf Grundlage der Erfassung des leichten Klopfens in dem Bedienbereich (44),
Überwachen von Zeiten der Erfassungen des leichten und starken Klopfens in dem Bedienbereich und in dem Verlaufsbereich (45),
Bilden eines primären Sicherheitssteuerbefehls als Reaktion auf das Erfassen des starken Klopfens in dem Bedienbereich (46) und
Bilden eines sekundären Sicherheitssteuerbefehls als Reaktion auf die Erfassungen des starken Klopfens in dem Bedienbereich und in dem Verlaufsbereich, wobei der sekundäre Sicherheitssteuerbefehl auch von der Art der Verbrennungsmotoren und dem Laufmodus (47) abhängt.

10. Verfahren nach Anspruch 9, **dadurch gekennzeichnet, dass** der Klopfsteuerbefehl einen Befehl zum spezifischen Anpassen des Pilot-Kraftstoffeinspritzzeitpunkts und/oder Luft/Kraftstoff-Verhältnis-Zylinders umfasst,
wobei der primäre Sicherheitssteuerbefehl Steuersignale zur Lastreduktion des Motors umfasst, und
wobei der sekundäre Sicherheitssteuerbefehl Steuersignale zum Herunterfahren des Motors, wenn die Art der Verbrennungsmotoren ein Gasmotor ist, oder Kraftstoffumschalten für den Fall, dass die Art der Motoren ein Zweistoff- oder Mehrstoffmotor ist, umfasst.

11. Verfahren nach Anspruch 10, **dadurch gekennzeichnet, dass** bei der Motorart, die der Zweistoff- oder Mehrstoffmotor ist, der primäre Sicherheitssteuerbefehl auch Steuersignale für das Kraftstoffumschalten bei bestimmten Laufmodi des Motors umfassen kann.

12. Verfahren nach Anspruch 11, **dadurch gekennzeichnet, dass** bei bestimmten extremen Laufmodi des Motors der primäre Sicherheitssteuerbefehl ferner Steuersignale zum Herunterfahren umfassen kann.

13. Verfahren nach Anspruch 9 - 12, **dadurch gekennzeichnet, dass** Null der Skalierwert ist, der einen normalen Zustand angibt, 10 der Skalierwert ist, der ein leichtes Klopfen angibt und 100 der Skalierwert ist, der ein starkes Klopfen angibt, und 100 der Schwellenwert des leichten Klopfens und 500 der Schwellenwert des starken Klopfens ist.

14. Verfahren nach Anspruch 13, **dadurch gekennzeichnet, dass** die Größe des Bedienbereichs 10 Ereignissen entspricht und die Größe des Verlaufsbereichs 10 Ereignissen entspricht, wobei ein Ereignis zyklusweise auftritt.

## Revendications

1. Agencement de contrôle de cognement pour un moteur à combustion, lequel agencement de contrôle de cognement comprend une unité de contrôle (1) qui est agencée pour former une commande de contrôle de cognement (2) à des unités de régulation et peut être reliée à des capteurs spécifiques aux cylindres (3), **caractérisé en ce que** l'agencement comprend en outre une unité de catégorisation (4) pour catégoriser des données de mesure des capteurs (3) sur trois valeurs d'échelle indiquant des occasions normales, de cognement léger et de cognement lourd, une mémoire de fenêtre coulissante (5) pour conserver les valeurs d'échelle en mémoire, laquelle mémoire de fenêtre coulissante est divisée en une zone de gestion (31) et une zone d'historique (32), une unité de détection de cognement (6) qui est agencée pour détecter un cognement léger et un cognement lourd à partir des valeurs d'échelle dans la zone de gestion (31) et dans la zone d'historique (32) en faisant la somme des valeurs d'échelle de la mémoire de fenêtre coulissante (5), le cognement léger du cylindre étant détecté lorsque la somme atteint un seuil de cognement léger, et le cognement lourd du cylindre étant détecté lorsque la somme atteint un seuil de cognement lourd, le seuil de cognement léger pouvant être atteint par l'occasion de cognement lourd unique, laquelle unité de contrôle (1) est agencée pour utiliser la détection de cognement léger dans la zone de gestion (31) pour former la commande de contrôle de cognement,
une unité de surveillance (7) pour surveiller les détections de cognement léger et lourd dans la zone de gestion (31) et dans la zone d'historique (32), et une unité de contrôle de sécurité (8) pour former une commande de contrôle de sécurité primaire (9) en réponse aux détections de cognement lourd dans la zone de gestion (31) et pour former une commande de contrôle de sécurité secondaire (10) en réponse aux détections de cognement lourd dans la zone de gestion (31) et dans la zone d'historique (32), la commande de contrôle de sécurité secondaire étant également dépendante du type et du mode de fonctionnement du moteur à combustion.

2. Agencement selon la revendication 2, **caractérisé en ce que** la commande de contrôle de cognement (2) de l'unité de contrôle (1) comprend des commandes pour ajuster la synchronisation du carburant pilote et/ou du cylindre de rapport air/carburant spécifiquement,
ladite commande de contrôle de sécurité primaire (9) comprenant des signaux de commande pour la réduction de la charge du moteur, et
ladite commande de contrôle de sécurité secondaire (10) comprenant des signaux de commande pour arrêter le moteur si le type du moteur à combustion est un moteur à essence, ou changer de carburant si le type du moteur est un moteur à bi-carburants ou à carburants multiples.

3. Agencement selon la revendication 2, **caractérisé en ce que** le type de moteur étant le moteur à bi-carburants ou le moteur à carburants multiples, la commande de contrôle de sécurité primaire (9) peut également comprendre des signaux de commande pour changer de carburant dans certains modes de fonctionnement du moteur.

4. Agencement selon la revendication 3, **caractérisé en ce que** dans certains modes de fonctionnement extrêmes du moteur, la commande de contrôle de sécurité primaire (9) peut en outre comprendre des signaux de commande pour l'arrêt.

5. Agencement selon selon la revendication 1 - 4, **caractérisé en ce que** zéro est ladite valeur d'échelle indiquant la normale, 10 est ladite valeur d'échelle indiquant un cognement léger et 100 est ladite valeur d'échelle indiquant un cognement lourd, et 100 est ledit seuil de cognement léger et 500 est ledit seuil de cognement lourd.

6. Agencement selon la revendication 5, **caractérisé en ce que** la taille de la zone de gestion (31) est de 10 occasions et la taille de la zone d'historique (32) est de 10 occasions, une occasion se produisant comme un cycle.

7. Agencement selon la revendication 1 - 6, **caractérisé en ce qu'**il comprend une unité de réglage (12) pour configurer et reconfigurer lesdites valeurs d'échelle.

8. Agencement selon la revendication 7, **caractérisé en ce que** l'unité de contrôle de sécurité (1) est également agencée pour former une alarme en cas de détection de cognement léger.

9. Procédé de contrôle de cognement pour un moteur à combustion qui est agencé pour former une commande de contrôle de cognement vers des unités de régulation en réponse à des données de capteurs spécifiques aux cylindres, **caractérisé en ce que** le procédé comprend en outre les étapes de
catégoriser des données de mesure des capteurs sur trois valeurs d'échelle indiquant des occasions normales, de cognement léger et de cognement lourd (41),
conserver les valeurs d'échelle en mémoire dans une mémoire de fenêtre coulissante pendant quelques temps, laquelle mémoire de fenêtre coulissante est divisée en une zone de gestion et une zone d'historique (42),
détecter un cognement léger et un cognement lourd à partir des valeurs d'échelle dans la zone de gestion et dans la zone d'historique en faisant la somme des valeurs d'échelle de la mémoire de fenêtre coulissante, le cognement léger du cylindre étant détecté lorsque la somme atteint un seuil de cognement léger, et le cognement lourd du cylindre étant détecté lorsque la somme atteint un seuil de cognement lourd, le seuil de cognement léger pouvant être atteint par l'occasion de cognement lourd unique (43),
former la commande de contrôle de cognement en se basant sur la détection de cognement léger dans la zone de gestion (44),
gérer des temps des détections de cognement léger et lourd dans la zone de gestion et dans la zone d'historique (45),
former une commande de contrôle de sécurité primaire en réponse à la détection de cognement lourd dans la zone de gestion (46) et
former une commande de contrôle de sécurité secondaire en réponse aux détections de cognement lourd dans la zone de gestion et la zone d'historique, la commande de contrôle de sécurité secondaire étant également dépendante du type et du mode de fonctionnement (47) du moteur à combustion.

10. Procédé selon la revendication 9, **caractérisé en ce que** la commande de contrôle de cognement comprend la commande pour ajuster la synchronisation du carburant pilote et/ou du cylindre de rapport air/carburant spécifiquement,
ladite commande de contrôle de sécurité primaire comprenant des signaux de commande pour réduire la charge du moteur, et
ladite commande de contrôle de sécurité secondaire comprenant des signaux de commande pour arrêter le moteur si le type du moteur à combustion est un moteur à essence, ou changer de carburant si le type du moteur est un moteur à bi-carburants ou un moteur à carburants multiples.

11. Procédé selon la revendication 10, **caractérisé en ce que** le type de moteur étant le moteur à bi-carburants ou le moteur à carburants multiples, la commande de contrôle de sécurité primaire peut également comprendre des signaux de commande pour changer de carburant dans certains modes de fonctionnement du moteur.

12. Procédé selon la revendication 11, **caractérisé en ce que** dans certains modes de fonctionnement extrêmes du moteur, la commande de contrôle de sécurité primaire peut comprendre en outre des signaux de commande pour l'arrêt.

13. Procédé selon la revendication 9 - 12, **caractérisé en ce que** zéro est ladite valeur d'échelle indiquant la normale, 10 est ladite valeur d'échelle indiquant un cognement léger et 100 est ladite valeur d'échelle indiquant un cognement lourd, et 100 est ledit seuil de cognement léger et 500 est ledit seuil de cognement lourd.

14. Procédé selon la revendication 13, **caractérisé en ce que** la taille de la zone de gestion est de 10 occasions et la taille de la zone d'historique est de 10 occasions, une occasion se produisant comme un cycle.
